# FASCICULE DE BREVET EUROPEEN

(11) **EP 3 994 349 B1**
(45) Date de publication et mention de la délivrance du brevet: **17.04.2024**
(21) Numéro de dépôt: 20737131.1
(22) Date de dépôt: 03.07.2020
(51) Int. Cl.: F02K 5/00, F02C 9/28

(54) **TURBOGÉNÉRATEUR AVEC SYSTÈME DE RÉGULATION SIMPLIFIÉ POUR AÉRONEF**
TURBOGENERATOR MIT VEREINFACHTEM REGELUNGSSYSTEM FÜR EIN FLUGZEUG
TURBOGENERATOR WITH SIMPLIFIED REGULATING SYSTEM FOR AN AIRCRAFT

(30) Priorité: 03.07.2019 FR 1907426
(43) Date de publication de la demande: 11.05.2022
(73) Titulaire: Safran Helicopter Engines, 64510 Bordes (FR); Safran Power Units, 31200 Toulouse (FR)
(72) Inventeur: MERCIER CALVAIRAC, Fabien, 77550 MOISSY-CRAMAYEL (FR); MARCONI, Patrick, 77550 MOISSY-CRAMAYEL (FR); REAL, Denis, 77550 MOISSY-CRAMAYEL (FR)
(74) Mandataire: Regimbeau
(86) Numéro de dépôt international: PCT/EP2020/068804
(87) Numéro de publication internationale: WO 2021/001527

(56) Documents cités:
- CA-A1- 3 006 123
- GB-A- 651 599
- US-A- 3 032 986
- US-A1- 2018 229 851
- US-A1- 2019 002 116

## Description

### DOMAINE DE L'INVENTION

La présente invention concerne le domaine de la régulation d'ensemble de propulsion pour aéronefs, notamment les systèmes de régulation de turbogénérateurs.

### ETAT DE LA TECHNIQUE

La présente invention trouve une large application dans tous types d'aéronefs, par exemple mais non limitativement les aéronefs de type VTOL (acronyme de « vertical take-off and landing » signifiant « décollage et atterrissage vertical »), et particulièrement des aéronefs hybrides.

Les aéronefs comprennent généralement un système propulsif, par exemple au moins une hélice, actionné par un ensemble de propulsion, comprenant au moins une turbomachine ayant une chambre de combustion alimentée en carburant par une pompe-carburant.

Un système de régulation (ou "control system") régule, en particulier, le régime de fonctionnement de la turbomachine, c'est-à-dire la vitesse de rotation de l'arbre entrainant notamment la turbine de la turbomachine, qui dépend en particulier du débit de carburant injecté dans la chambre de combustion par la pompe-carburant.

Afin de réduire la consommation en carburant et de produire des aéronefs hybrides permettant d'accéder à des vols électriques, il convient d'utiliser un ensemble de propulsion comprenant également une génératrice électrique, couplée sur l'arbre monté en rotation de la turbomachine, c'est-à-dire d'utiliser un turbogénérateur.

En effet, si la capacité des moyens de stockage d'énergie électrique augmente, notamment la capacité des batteries chimiques, leur apport énergétique est encore trop faible par rapport à l'encombrement et au poids imposés à l'aéronef, leur densité énergétique est trop faible de sorte que les moyens de stockage d'énergie électrique ne permettent pas à eux seuls d'alimenter le système propulsif d'un aéronef, et ils ne présentent donc actuellement pas à eux seuls une alternative viable pour faire fonctionner un aéronef sur des vols réguliers.

En tout état de cause, afin de rendre plus accessible ce type d'aéronef hybride, il est nécessaire de réduire son coût de développement et de fabrication. Le coût de développement et de fabrication du turbogénérateur est notamment très élevé, et en particulier le coût du système de régulation de la turbomachine peut représenter jusqu'à plus de 30% du coût global de la turbomachine.

Dans le domaine de l'aéronautique, le système de régulation des turbogénérateurs comprend généralement des capteurs, au moins un actionneur actionnant un doseur et un calculateur. Ce système de régulation permet de contrôler précisément la quantité de carburant à injecter dans la chambre de combustion de la turbomachine afin de contrôler le régime et le couple de sortie de la turbomachine dans le but de délivrer à tout instant la puissance adéquate pour produire de l'électricité grâce à la génératrice électrique couplée à la turbomachine.

En effet, sans une régulation précise de la turbomachine en vitesse et/ou en couple, la génératrice électrique ne peut produire le bon niveau de puissance électrique. Ainsi, il est nécessaire de piloter précisément et en permanence l'actionneur pilotant la position du doseur contrôlant le débit de carburant injecté, notamment à travers des lois de régulation en boucle fermée, comprenant par exemple de nombreux régulateurs proportionnel-intégral (PI ou PID), qui sont chères et fastidieuses à développer et à implémenter.

De plus, le besoin de régulation de la puissance mécanique en sortie d'une turbomachine aéronautique, impactant directement la fiabilité du système propulsif de l'aéronef, demande des fonctionnalités et des surveillances impliquant notamment des certifications coûteuses, afin de garantir la sécurité d'un usager.

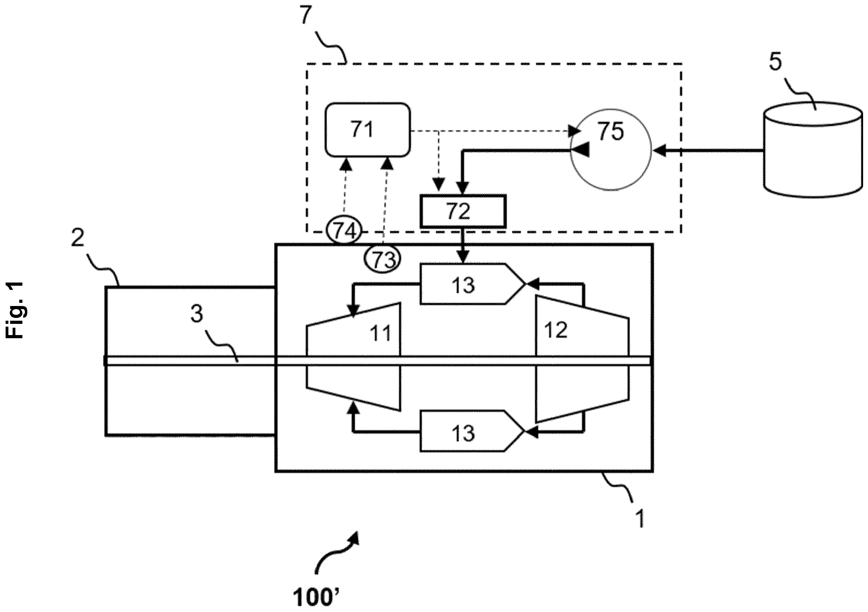

Un ensemble de propulsion pour aéronef 100' comprenant un turbogénérateur (1,2) avec un système de régulation 7 tel que connu à ce jour est illustré schématiquement par la figure 1.

Le système de régulation 7 comprend :
- une pluralité de capteurs (73,74), comprenant au moins un premier ensemble de capteurs 74 non situés en zone chaude, permettant par exemple une mesure de la pression et de la température ambiante, et comprenant un capteur permettant une mesure sur l'arbre 3 du régime de la turbomachine 1, et un deuxième ensemble de capteurs 73 situés en zone chaude, permettant une mesure de la pression en sortie du compresseur 12 de la turbomachine 1 et une mesure de la température en sortie de la turbine Haute Pression 11 de la turbomachine 1 ;
- un calculateur 71, par exemple une unité de commande électronique (ECU, acronyme anglais de « Electronic Control Unit »), sur lequel sont implémentées plusieurs lois complexes régissant la régulation de la turbomachine 1, nécessitant un coût de développement important et des certifications coûteuses ;
- une pompe 75, couplée à des actionneurs 72, typiquement hydromécaniques de type servovalve ou doseur, comprenant une unité de régulation numérique du moteur à pleine autorité (FADEC, acronyme anglais de « Full Authority Digital Engine Control »), permettant le contrôle du débit de carburant stocké dans un réservoir 5 et injecté dans une chambre de combustion 13.

Comme expliqué précédemment, ce type de système de régulation 7, indépendant du pilotage d'autres machines de l'aéronef, est à la fois complexe et cher. La génératrice électrique 2 produit généralement une tension triphasée, dont la fréquence sera dépendante du régime de la turbomachine 1, pilotée par le système de régulation 7.

De plus, les capteurs 73 situés en zone chaude sont soumis à des exigences très sévères et sont source de défaillance, ce qui pose un problème de fiabilité, et un risque pour la sécurité d'un usager.

Le document CA 3 006 123 décrit un ensemble de propulsion pour aéronef conforme au préambule de la revendication 1.

Le document US 2019/002116 et le document US 2018/229851 décrivent chacun un ensemble de propulsion pour aéronef comprenant une turbomachine et un moteur électrique..

### EXPOSE DE L'INVENTION

Un but général de la présente invention est de proposer une solution aux problèmes identifiés, et notamment de réduire les coûts de développement et de fabrication d'ensembles de propulsion pour aéronefs, et en particulier des systèmes de régulation de turbomachines, tout en satisfaisant les exigences de sécurité et fiabilité, notamment en s'affranchissant de capteurs en zone chaude.

Les buts précités sont atteints par la présente invention grâce à un ensemble de propulsion pour aéronef conforme à la revendication 1 et à un procédé de régulation conforme à la revendication 8.

### DESCRIPTION DES FIGURES

D'autres caractéristiques, buts et avantages de l'invention, apparaîtront à la lecture de la description détaillée qui va suivre, et en regard des dessins annexés, donnés à titre d'exemples non limitatifs et sur lesquels :
La figure 1 représente un schéma d'un système de régulation pour un ensemble de propulsion pour aéronef comprenant un turbogénérateur tel que connu de l'art antérieur ;
La figure 2 représente un schéma d'un ensemble de propulsion pour aéronef selon un premier exemple de réalisation ;
La figure 3 représente un schéma d'un ensemble de propulsion pour aéronef selon un deuxième exemple de réalisation ;
La figure 4 représente un schéma d'un ensemble de propulsion pour aéronef selon un troisième exemple de réalisation ;
La figure 5 illustre schématiquement l'évolution du régime de la turbomachine et de la puissance prélevée sur la génératrice en fonction du temps selon un exemple de réalisation
La figure 6 représente un schéma d'un aéronef comprenant un ensemble de propulsion pour aéronef selon un exemple de réalisation.

### DESCRIPTION DETAILLEE DE L'INVENTION

Comme expliqué précédemment un aéronef hybride est généralement propulsé par un ensemble de propulsion 100 comprenant une machine thermique de type turbomachine 1 associée à une génératrice 2.

Selon l'invention, il est prévu d'associer une turbomachine, par exemple de type turbomachine à turbine liée, à une génératrice électrique. C'est à travers la génératrice et le pilotage de la puissance électrique délivrée en sortie que la turbomachine va pouvoir être contrôlée en régime grâce à une électronique de puissance spécifique (EP) capable de réguler la puissance électrique de sortie en fonction du régime de rotation de la génératrice.

De préférence, le couple de la turbomachine est une conséquence tabulée en boucle ouverte dans une pompe à carburant à cylindrée variable.

Selon l'invention, il est prévu une stratégie de régulation et des composants simplifiés qui permettent de s'affranchir des principaux capteurs, actionneurs et de son calculateur complexe pour réguler correctement l'énergie électrique produite par la génératrice.

Une possibilité de régulation est la suivante, en fonctionnement nominal :
- La turbomachine, par exemple de type turbomachine à turbine liée, est régulée en carburant via une fonction directe de la pression ambiante et de son régime de rotation (dit régime de turbomachine) ; et
- La puissance prélevée sur la génératrice électrique attenante est régulée grâce à une électronique de puissance (EP) pour atteindre une cible de vitesse de rotation de la turbomachine.

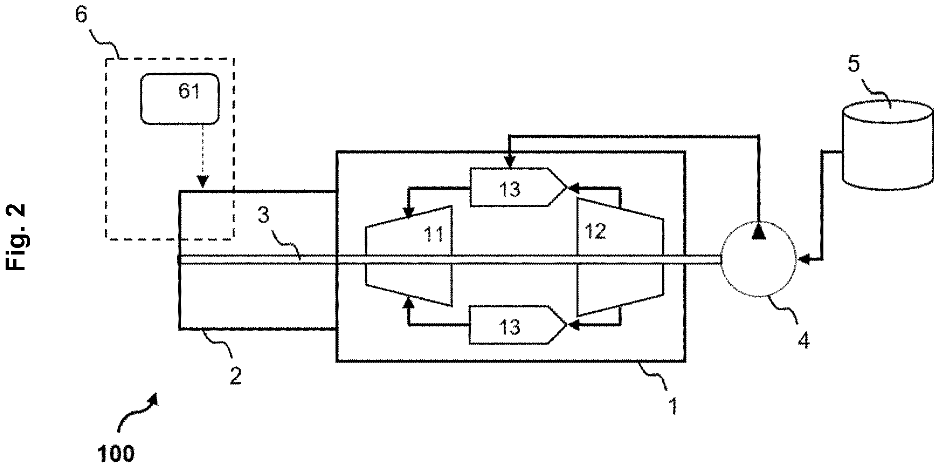

La figure 2 illustre un ensemble de propulsion 100 selon un premier exemple de réalisation. La turbomachine 1 comprend de manière générale un arbre 3 monté en rotation, destiné à tourner à un régime de turbomachine, sur lequel est accouplée la génératrice 2. La turbomachine 1 comprend également au moins une chambre de combustion 13.

Dans un exemple de réalisation non limitatif, on considère une turbomachine 1 à turbine liée, c'est-à-dire une turbomachine 1 comprenant au moins un compresseur 12 lié mécaniquement à la turbine 11 par l'intermédiaire de l'arbre 3 monté en rotation. Ainsi, l'arbre 3 entraine le compresseur 12 et la turbine 11 selon une même vitesse de rotation, appelée également régime de turbomachine.

La génératrice électrique 2, sur laquelle une puissance électrique est destinée à être prélevée, permet d'alimenter en électricité différents systèmes de bord (propulsifs ou non propulsifs) de l'aéronef.

La génératrice 2 peut être une génératrice électrique comprenant un rotor et un stator, et étant accouplée directement à la turbomachine 1, c'est-à-dire que le rotor de la génératrice électrique 2 est entrainé par l'arbre 3 de la turbomachine 1. Ainsi, le rotor de la génératrice 2 peut être couplé directement à l'arbre 3 et ainsi tourner à la même vitesse de rotation que la turbine 11 et le compresseur 12 de la turbomachine 1, ou de manière alternative être couplé à l'arbre 3 par l'intermédiaire d'un réducteur (non illustré), et tourner ainsi à un régime moins important.

L'ensemble de propulsion 100 comprend également un système de régulation 6, permettant de réguler le fonctionnement de l'ensemble de propulsion, afin par exemple d'atteindre un régime de turbomachine cible. Le système de régulation 6 comprend une pompe-carburant 4 destinée à amener du carburant, stocké dans un réservoir de carburant 5, dans la chambre de combustion 13 avec un certain débit de carburant.

Avec une telle pompe-carburant 4, le débit de carburant est une fonction directe d'une pression ambiante et du régime de turbomachine, comme cela sera détaillé par la suite.

Comme illustré sur la figure 2, la pompe-carburant 4 peut être entrainée mécaniquement par la turbomachine 1.

De préférence, la pompe-carburant 4 est configurée pour fournir un débit de carburant proportionnel à la pression ambiante et croissant avec le régime de la turbomachine.

La pompe-carburant 4 peut faire partie du système de régulation 6 de manière passive, c'est-à-dire que son fonctionnement et notamment le débit de carburant injecté peut découler mécaniquement du régime de turbomachine, par exemple lorsque la pompe-carburant 4 est une pompe mécanique en prise directe avec la turbomachine, c'est-à-dire que l'actionnement de la pompe-carburant 4 est entrainé mécaniquement par la rotation de l'arbre 3 de la turbomachine 1. On parle de pompe-carburant en prise directe. Ce type de pompe est courant (pompe mécanique). Les régimes de rotation usuels des pompes à carburant sont bien plus faibles que les régimes de rotation des turbomachines, il y donc forcément une réduction, intégrée ou non dans la pompe. Le type de réducteur peut être soit une cascade de pignons, soit un train épicycloïdal.

Dans un exemple de réalisation, le débit de carburant dépend directement du régime de turbomachine et de la pression ambiante. De préférence, la pompe-carburant 4 est calibrée pour injecter du carburant dans la chambre de combustion 13 à un débit de carburant proportionnel au régime de turbomachine.

De préférence, la cylindrée de la pompe-carburant 4 peut être proportionnelle à la pression ambiante (correspondant à la pression atmosphérique), de sorte que le débit de carburant est proportionnel à la pression ambiante.

La pompe-carburant 4 peut de manière alternative faire partie du système de régulation 6 de manière active, la pompe-carburant 4 étant électrique et le débit de carburant injecté dans la chambre de combustion 7 étant piloté par une électronique de commande. La pompe-carburant 4 peut être par exemple une pompe de dosage de carburant, appelée également pompe FMP (selon l'acronyme anglais « Fuel Metering Pump »).

De manière avantageuse, l'électronique de commande de la pompe-carburant électrique 4 peut comprendre un système de dosage intégré, comprenant une tabulation permettant de relier le régime de turbomachine et la pression ambiante au débit de carburant à injecter. Le régime de turbomachine et la pression ambiante peuvent être mesurés par des capteurs spécifiques. Le débit de carburant injecté par la pompe-carburant électrique 4 est une fonction simple du régime de turbomachine multiplié par la pression ambiante. Par exemple, pour une machine de la classe 150 kW, le débit carburant à pleine charge est de l'ordre de 70 kg/h, et le régime de stabilisation est de 100%. Si l'on enlève la charge, la convergence de régime (dynamiquement obtenue selon la méthode de pilotage énoncée ci-dessus) se situera à 71 % du régime nominal, le débit carburant résultant sera de 20 kg/h. Une interpolation linéaire entre ces points permettra de déterminer le régime de stabilisation en fonction du débit de carburant. Ce principe d'une régulation simple est applicable quel que soit la taille du turbogénérateur, en adaptant le débit de carburant à pleine charge et à charge nulle.

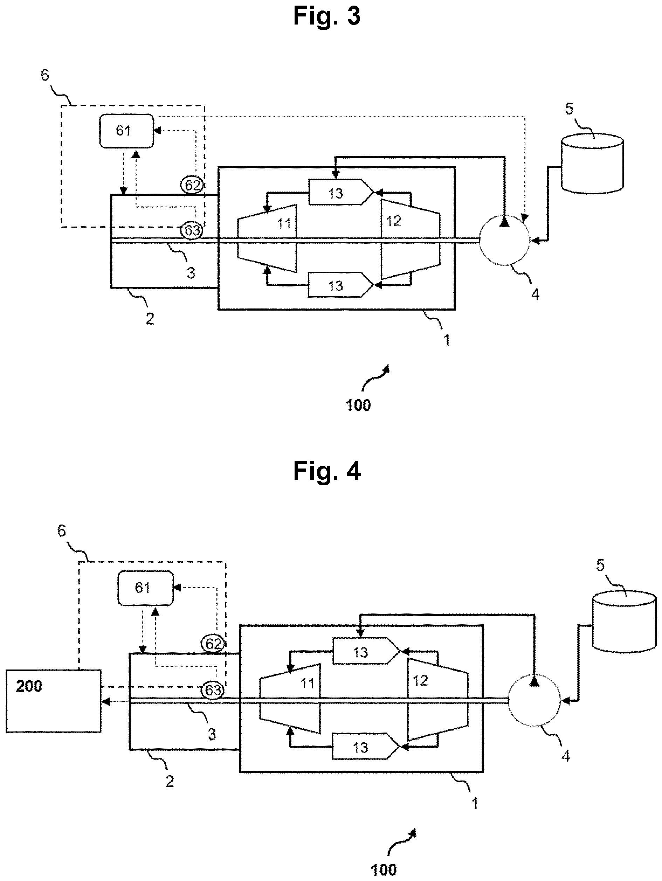

Dans un exemple de réalisation, illustré par exemple sur la figure 3, un capteur de vitesse de rotation 63, par exemple un capteur inductif disposé à proximité de l'arbre 3 en rotation, un capteur optique ou un capteur équipé de fibre optique, est configuré pour mesurer le régime de turbomachine et transmettre cette information au système de dosage intégré à la pompe-carburant 4.

Un capteur de pression ambiante 62, disposé par exemple à l'extérieur de l'ensemble de propulsion 100, est configuré pour mesurer la pression ambiante ou pression atmosphérique et transmettre cette information au système de dosage intégré à la pompe-carburant 4.

La pompe-carburant électrique 4 est particulièrement avantageuse, car elle permet un démarrage stable, comme il sera détaillé par la suite.

Le système de régulation 6 comprend également une électronique de puissance 61 spécifique, couplée à la génératrice électrique 2. L'électronique de puissance 61 du système de régulation 6 est capable de réguler la puissance électrique prélevée en sortie de la génératrice électrique 2, en fonction de la vitesse de rotation de la génératrice électrique 2 et donc du régime de turbomachine.

L'électronique de puissance 61 peut réguler la puissance électrique prélevée sur la génératrice électrique 2, et par conséquent réguler le régime de turbomachine, comme il sera détaillé par la suite.

De préférence, la quantité de carburant à injecter dans la chambre de combustion 13 est prédéfinie par une mise au point initiale du système de régulation au banc qui permettra de générer une table déterminant le débit à injecter en fonction du régime de rotation et de la pression ambiante, de sorte que le régime de turbomachine atteint peut être défini en conséquence. Cette table permettra de définir la régulation en boucle ouverte de la turbomachine, et permet de s'affranchir d'un développement complexe de régulation à certifier.

L'électronique de puissance 6 permet d'atteindre un régime de turbomachine cible (Ncible) en conséquence. Le régime obtenu est donc directement lié à la charge prélevée.

Ce type de système de régulation 6 est particulièrement avantageux car il permet de s'affranchir du calculateur 71 des systèmes de régulation 7 de l'art antérieur illustré sur la figure 1, qui sont complexes et présentent un coût élevé.

De manière avantageuse, et comme cela est illustré sur la figure 4 par un troisième exemple de réalisation, l'ensemble de propulsion 100 pour aéronef comprend un moyen de stockage d'énergie 200, par exemple un moyen de stockage d'énergie électrique, typiquement une batterie.

Le moyen de stockage d'énergie 200 peut permettre de fournir une puissance électrique aux différents systèmes de bord de l'aéronef lorsque la génératrice électrique 2 ne fournit pas une puissance suffisante. Cela permet d'augmenter la fiabilité de l'ensemble de propulsion. De cette manière, on peut obtenir un ensemble de propulsion qui répond au besoin de puissance et d'énergie tout en maitrisant la masse embarquée sur l'aéronef.

Par exemple, le moyen de stockage d'énergie 200 peut être configuré pour fournir une puissance électrique supplémentaire lorsque la puissance électrique prélevée est inférieure à une puissance électrique cible (Pcible), ou plus généralement, lorsque la puissance électrique prélevée est insuffisante pour assurer tous les besoins en électricité de l'aéronef. Cela peut être le cas au démarrage ou dans des régimes transitoires. Le moyen de stockage d'énergie électrique 200 permet de considérablement réduire le besoin de réactivité du turbogénérateur (1,2).

De préférence, l'ensemble de propulsion 100 pour aéronef comprend au moins un capteur de pression ambiante 62 et un système de surveillance santé moteur. Le système de surveillance santé moteur est configuré pour comparer la puissance électrique prélevée à un régime donné dépendant de la pression ambiante.

De préférence, l'ensemble de propulsion 100 pour aéronef comprend au moins un capteur du régime de turbomachine 63 et un système de surveillance de survitesse configuré pour réguler le régime de turbomachine dans le cas d'une défaillance du système de régulation 6.

Le système de surveillance survitesse est particulièrement avantageux dans l'éventualité où le système de régulation 6 présenterait des défaillances, et notamment permet de contrôler que le régime de turbomachine n'est pas supérieur à un certain régime limite, à partir duquel il existerait un risque d'endommagement de l'ensemble de propulsion, et notamment de parties en rotation de la turbomachine. La surveillance réalisée permet de contrôler les divergences.

On notera que le système de surveillance peut être intégré à une unité de commande électronique ECU, par exemple sur une carte spécifique.

Le système de surveillance peut également être totalement indépendant, par exemple être disposé dans un boitier à part, couplé à l'ensemble de propulsion.

De manière générale, l'ensemble de propulsion 100 peut fonctionner selon différentes phases.

Selon un autre aspect, il est proposé un procédé de régulation d'un ensemble de propulsion 100 pour aéronef comprenant une turbomachine 1 à turbine liée, ayant une chambre de combustion 13 et un arbre 3 monté en rotation et destiné à tourner à un régime de turbomachine, et une génératrice électrique 2 accouplée sur l'arbre de la turbomachine.

De manière avantageuse, le procédé de régulation peut être mis en oeuvre dans un ensemble de propulsion 100 pour aéronef tel que décrit précédemment.

Dans un exemple de réalisation, le procédé de régulation comprend les étapes consistant à :
- amener du carburant dans la chambre de combustion 13 par l'intermédiaire d'une pompe-carburant 4 en imposant un débit de carburant selon une fonction directe d'une pression ambiante et du régime de turbomachine; et
- prélever une puissance électrique sur la génératrice électrique, la puissance électrique prélevée étant régulée par une électronique de puissance couplée à la génératrice électrique de sorte à atteindre un régime de turbomachine cible.

Selon un exemple de fonctionnement classique lors d'une phase de démarrage, appelée mode démarreur, de l'énergie électrique est injectée dans la génératrice (qui prendra le rôle de démarreur électrique) afin de permettre la mise en rotation de la turbomachine. L'injection de carburant via le système de régulation simplifié est calibrée pour être effective à partir d'un régime de rotation déterminé (typiquement 10% du régime nominal), afin d'initier la combustion via le fonctionnement des bougies.

Le mélange d'air comprimé et de carburant est enflammé dans l'au moins une chambre de combustion 13 par au moins une bougie ou un allumeur, afin d'entrainer une dilatation du mélange, qui traverse la turbine 11 liée de la turbomachine 1, entrainant par l'intermédiaire de l'arbre 3 monté en rotation le compresseur 12 et la pompe-carburant 4.

De préférence, le mode démarreur est maintenu tant que le régime de turbomachine est inférieur à un seuil de régime N1 (10 à 20 % du régime nominal). Au moins une bougie est alors active, et la génératrice 2 fonctionne en mode moteur, c'est-à-dire qu'elle ne convertit pas une énergie mécanique en énergie électrique, mais au contraire assiste la turbomachine 1 en fournissant un couple à l'arbre de rotation 3, de sorte à augmenter le régime de turbomachine.

De préférence, tant que le régime de turbomachine est inférieur au seuil de régime de turbomachine N1, la pompe-carburant 4 alimente la chambre de combustion 13 avec un débit de carburant proportionnel au régime de turbomachine. Typiquement, le débit de carburant peut être égal au produit du régime de turbomachine et de la pression ambiante.

Ce mode démarreur est avantageux, car il permet d'assurer la continuité du mouvement.

Après un certain temps, par exemple quelques secondes, de préférence quelques millisecondes, on atteint une phase intermédiaire, dans laquelle la bougie est désactivée et la génératrice électrique 2 ne sert plus d'entrainement à la turbomachine 1, c'est-à-dire que la turbomachine 1 fonctionne de manière autonome sans assistance de la génératrice électrique 2.

De préférence, la phase intermédiaire est atteinte si le régime de la turbomachine est supérieur au premier seuil de régime de turbomachine N1 et inférieur à un deuxième seuil de régime de turbomachine N2 (20% du régime nominal). La génératrice électrique 2 ne fonctionne pas, et pourrait même être désaccouplée de l'arbre 3. La pompe-carburant 4 est configurée pour injecter du carburant dans la chambre de combustion 13 de sorte à ce que le régime de turbomachine augmente jusqu'à atteindre le deuxième seuil de régime N2.

Dans un exemple de réalisation préférentiel, lorsque le deuxième seuil de régime de turbomachine N2 est atteint, on atteint une phase finale dans laquelle la génératrice électrique 2 fonctionne en mode générateur, étant notamment accouplée à l'arbre en rotation 3 de la turbomachine 1. De préférence, la bougie reste désactivée. La puissance électrique prélevée est alors régulée par une électronique de puissance 61 pour atteindre un régime de turbomachine nominal, c'est-à-dire le régime de fonctionnement de la turbomachine 1 correspondant au rendement maximal de la turbomachine 1. En effet, le compresseur 12 et la turbine 11 de la turbomachine 1 sont conçus pour un point de fonctionnement donné, pour lequel le rendement est maximal. Ce point de fonctionnement nominal est caractérisé, pour des conditions standard de pression et de température par un débit de carburant et un taux de pression (ou de détente) et ce, pour une vitesse de rotation ou régime de turbomachine donnés.

Le régime nominal souhaité dépend notamment de la charge mécanique sur l'arbre 3 de la turbomachine 1. Par exemple, lors d'un besoin de puissance électrique plus important, il peut être nécessaire d'augmenter la charge mécanique sur l'arbre 3 de la turbomachine 1. Pour cela, il faut donc augmenter le débit de carburant, et donc le régime de turbomachine.

De manière classique, une augmentation de la puissance prélevée ou de la charge électrique conduit à une charge mécanique plus importante, et donc tend à réduire le régime de turbomachine.

Dans un exemple de réalisation préférentiel, le système de régulation 6 est prévu pour piloter la puissance électrique prélevée sur la génératrice électrique 2, de sorte à imposer le régime de turbomachine, et par conséquence le débit de carburant de la pompe-carburant 4, comme expliqué précédemment.

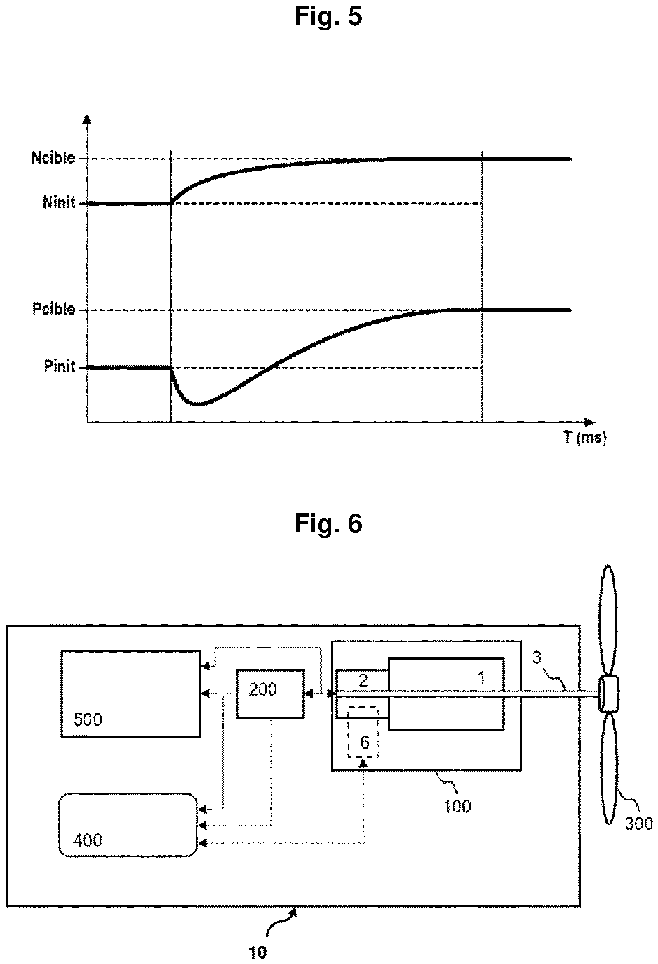

Un exemple de pilotage est illustré schématiquement sur la figure 5. A un premier instant, dit instant initial, la turbomachine 1 a un régime de turbomachine initial Ninit et la puissance initiale prélevée sur la génératrice électrique 2 est égale à Pinit.

Pour permettre une accélération d'un système propulsif ou pour faire face à une variation de l'environnement par exemple, il peut être nécessaire d'atteindre un régime de turbomachine cible Ncible plus élevé que le régime de turbomachine initiale Ninit.

De manière avantageuse, la génératrice électrique 2 peut être donc pilotée par l'électronique de puissance 61, en amont d'un appel de charge mécanique sur la turbomachine 1, de sorte à réduire le couple résistant et donc la charge électrique de manière transitoire et permettre ainsi l'accélération de la turbomachine 1, c'est-à-dire que la puissance électrique P prélevée diminue transitoirement de sorte à augmenter le régime de turbomachine N pour atteindre le régime de turbomachine cible Ncible, puis la puissance électrique prélevée augmente pour atteindre la puissance électrique cible Pcible et un régime de turbomachine constant et stabilisé au régime de turbomachine cible Ncible.

Par exemple, le régime de turbomachine constant atteint peut être le régime de fonctionnement nominal souhaité.

De préférence, la puissance électrique cible Pcible varie relativement lentement.

Ainsi, l'électronique de puissance 61 du système de régulation 6 pilote une phase transitoire de régime de turbomachine et un niveau d'accélération de la turbomachine 1 uniquement en pilotant la charge électrique ou puissance prélevée sur la génératrice électrique 2.

De manière symétrique, lorsque le besoin de puissance électrique est moins important, il peut être nécessaire de diminuer la charge mécanique sur l'arbre 3 de la turbomachine 1. Pour cela, il faut donc diminuer le débit de carburant, et donc le régime de turbomachine.

De même, de manière avantageuse, la génératrice électrique 2 peut être donc pilotée par l'électronique de puissance 61, en amont d'une diminution de l'appel de puissance électrique, de sorte à augmenter le couple résistant ou charge mécanique prélevée par la génératrice 2 et donc la charge électrique de manière transitoire, et permettre ainsi une décélération de la turbomachine 1, c'est-à-dire que la puissance électrique prélevée augmente transitoirement de sorte à diminuer le régime de turbomachine, puis la puissance électrique prélevée diminue pour atteindre la puissance électrique cible et un régime de turbomachine constant.

L'électronique de puissance 61 peut ainsi être configurée pour réguler la puissance électrique prélevée sur la génératrice électrique 2 en amont d'un besoin de puissance électrique moins important, de sorte à augmenter transitoirement la puissance électrique prélevée de sorte à diminuer le régime de turbomachine, puis diminuer la puissance électrique prélevée pour atteindre la puissance électrique cible et un régime de turbomachine constant.

De préférence, le système de régulation 6 peut comprendre un superviseur permettant de générer les appels de puissance électrique.

Dans un exemple de réalisation, la génératrice électrique 2 est configurée pour prélever en permanence de la puissance sur l'arbre 3 de la turbomachine 1, en dehors de la phase de démarrage. Comme expliqué précédemment, le régime de turbomachine est donc ajusté en fonction du prélèvement de puissance électrique, de manière proportionnelle aux appels de puissance électriques. Le régime maximal de la turbomachine 1 est obtenu en correspondance du point de prélèvement maximal.

Selon un autre aspect, illustré schématiquement sur la figure 6, l'ensemble de propulsion 100 décrit précédemment peut être implémenté sur un aéronef 10, par exemple un aéronef de type VTOL (vertical take-off and landing).

L'ensemble de propulsion 100 est relié à un système propulsif 300 de l'aéronef 10, par exemple de type hélice, afin de permettre le bon fonctionnement de l'aéronef 10 lors d'un vol.

L'ensemble de propulsion 100 peut également être relié à un système de contrôle d'énergie 400 de l'aéronef 10. De préférence, le système de contrôle d'énergie 400 est capable d'échanger des informations avec le système de régulation 6, et en particulier d'envoyer des commandes ou consignes.

De préférence, comme cela est illustré sur la figure 6, l'aéronef 10 comprend un moyen de stockage d'énergie 200, par exemple un moyen de stockage d'énergie électrique, typiquement une batterie.

Dans un exemple de réalisation, le système de contrôle d'énergie 400 est configuré pour piloter la puissance prélevée sur la génératrice électrique 2 en fonction d'une demande instantanée du système propulsif 300, d'un état de charge de l'éventuel moyen de stockage d'énergie électrique 200, et/ou d'une valeur cible d'un niveau de charge du moyen de stockage 200.

La génératrice électrique 2, sur laquelle la puissance électrique est prélevée, peut permettre d'alimenter en électricité les différents systèmes (propulsifs ou non propulsifs) de l'aéronef. Le moyen de stockage d'énergie 200 peut aussi permettre de fournir une puissance électrique aux différents systèmes de bord 500 de l'aéronef 10, ou à d'autres usages nécessitant une consommation électrique, notamment lorsque la génératrice électrique 2 ne fournit pas une puissance suffisante.

Le lecteur aura compris que de nombreuses modifications peuvent être apportées sans sortir matériellement des nouveaux enseignements et des avantages décrits ici.

## Revendications

1. Ensemble de propulsion pour aéronef comprenant :
- une turbomachine (1) à turbine liée, comprenant une chambre de combustion et un arbre monté en rotation, destiné à tourner à une vitesse de rotation de la turbomachine ;
- une génératrice électrique (2) accouplée sur l'arbre de la turbomachine, et sur laquelle une puissance électrique est destinée à être prélevée ;
l'ensemble comprenant en outre un système de régulation comprenant :
- une pompe-carburant (4), et
- une électronique de puissance couplée à la génératrice (2) électrique,
**caractérisé en ce que**
le système de régulation est configuré pour amener du carburant dans la chambre de combustion à un débit de carburant, le débit de carburant étant une fonction directe d'une pression ambiante et de la vitesse de rotation de la turbomachine ; et
l'électronique de puissance (6) est configurée pour réguler la puissance électrique prélevée de sorte à atteindre une vitesse de rotation de la turbomachine cible (Ncible).

2. Ensemble de propulsion pour aéronef selon la revendication 1, dans lequel la pompe-carburant (4) est configurée pour fournir un débit de carburant proportionnel à la pression ambiante et croissant avec la vitesse de rotation de la turbomachine.

3. Ensemble de propulsion pour aéronef selon la revendication 2, dans lequel la pompe-carburant (4) est une pompe mécanique en prise directe avec la turbomachine, dans laquelle le débit de carburant dépend mécaniquement de la vitesse de rotation de la turbomachine et de la pression ambiante.

4. Ensemble de propulsion pour aéronef selon la revendication 2, comprenant en outre un capteur de la vitesse de rotation de la turbomachine et un capteur de pression ambiante, dans lequel la pompe-carburant (4) est une pompe électrique configurée pour fournir le débit de carburant selon une fonction du produit de la pression ambiante et de la vitesse de rotation de la turbomachine.

5. Ensemble de propulsion pour aéronef selon l'une des revendications 1 à 4, comprenant en outre un système de stockage d'énergie (200) configuré pour fournir une puissance électrique supplémentaire lorsque la puissance électrique prélevée est inférieure à une puissance électrique cible.

6. Ensemble de propulsion pour aéronef selon l'une quelconque des revendications 1 à 5, comprenant au moins un capteur de la vitesse de rotation de la turbomachine (63) et un système de surveillance de survitesse configuré pour réguler la vitesse de rotation de la turbomachine dans le cas d'une défaillance du système de régulation.

7. Ensemble de propulsion pour aéronef selon l'une quelconque des revendications 1 à 6, comprenant au moins un capteur de pression ambiante (62) et un système de surveillance santé moteur, configuré pour comparer la puissance électrique prélevée à une puissance électrique prévue dépendant de la pression ambiante.

8. Procédé de régulation d'un ensemble de propulsion pour aéronef comprenant une turbomachine à turbine liée, ayant une chambre de combustion et un arbre monté en rotation et destiné à tourner à une vitesse de rotation de turbomachine, et une génératrice électrique (2) accouplée sur l'arbre de la turbomachine, le procédé comprenant les étapes consistant à :
amener du carburant dans la chambre de combustion par l'intermédiaire d'une pompe-carburant (4) en imposant un débit de carburant selon une fonction directe d'une pression ambiante et de la vitesse de rotation de la turbomachine; et
prélever une puissance électrique sur la génératrice électrique (2), la puissance électrique prélevée étant régulée par une électronique de puissance (6) couplée à la génératrice électrique (2) de sorte à atteindre une vitesse de rotation de la turbomachine cible (Ncible).

9. Procédé de régulation selon la revendication 8, dans lequel la puissance électrique prélevée et le débit de carburant dépendent d'un premier seuil de vitesse de rotation de la turbomachine (N1) et d'un deuxième seuil de vitesse de rotation de la turbomachine (N2), et dans lequel
si la vitesse de rotation de la turbomachine est inférieure au premier seuil de vitesse de rotation de la turbomachine (N1), la génératrice électrique (2) fonctionne en mode moteur dans lequel la génératrice électrique (2) assiste la turbomachine, et le débit de carburant est proportionnel à la vitesse de rotation de la turbomachine,
si la vitesse de rotation de la turbomachine est supérieure au premier seuil de vitesse de rotation de la turbomachine (N1) et inférieure au deuxième seuil de vitesse de rotation de la turbomachine (N2), la turbomachine est autonome sans assistance de la génératrice électrique (2);
si la vitesse de rotation de la turbomachine est supérieure au deuxième seuil de vitesse de rotation de la turbomachine (N2), la génératrice électrique (2) fonctionne en mode générateur, et la puissance électrique prélevée est régulée par l'électronique de puissance (6) pour atteindre une vitesse de rotation de la turbomachine nominale.

10. Procédé de régulation pour un ensemble de propulsion pour aéronef selon l'une quelconque des revendications 8 ou 9, dans lequel l'électronique de puissance (6) est configurée pour réguler la puissance électrique prélevée sur la génératrice électrique (2) en amont d'un appel de charge mécanique sur la turbomachine, de sorte à diminuer transitoirement la puissance électrique prélevée de sorte à augmenter la vitesse de rotation de la turbomachine, puis augmenter la puissance électrique prélevée pour atteindre la puissance électrique cible et une vitesse de rotation de la turbomachine constante.

11. Procédé de régulation pour un ensemble de propulsion pour aéronef selon l'une quelconque des revendications 8 à 10, dans lequel l'électronique de puissance (6) est configurée pour réguler la puissance électrique prélevée sur la génératrice électrique (2) en amont d'un besoin de puissance électrique moins important, de sorte à augmenter transitoirement la puissance électrique prélevée de sorte à diminuer la vitesse de rotation de la turbomachine, puis diminuer la puissance électrique prélevée pour atteindre la puissance électrique cible et une vitesse de rotation de la turbomachine constante.

12. Procédé de régulation pour un ensemble de propulsion pour aéronef selon l'une quelconque des revendications 8 à 11, comprenant en outre une étape consistant à :
comparer la puissance électrique prélevée à une puissance électrique prévue dépendant d'une pression ambiante.

## Patentansprüche

1. Antriebsanordnung für ein Luftfahrzeug, umfassend:
- eine Strömungsmaschine (1) mit verbundener Turbine, umfassend eine Brennkammer und eine rotatorisch angebrachte Welle, die bestimmt ist, in einer Rotationsgeschwindigkeit der Strömungsmaschine zu drehen;
- einen Stromgenerator (2), der mit der Welle der Strömungsmaschine gekoppelt ist und von dem eine elektrische Leistung bestimmt ist, abgerufen zu werden;
wobei die Anordnung ferner ein Regelungssystem umfasst, umfassend:
- eine Kraftstoffpumpe (4), und
- eine Leistungselektronik, die mit dem Stromgenerator (2) gekoppelt ist,
**dadurch gekennzeichnet, dass**
das Regelungssystem dazu ausgelegt ist, Kraftstoff in die Brennkammer mit einem Kraftstoffdurchsatz zu leiten, wobei der Kraftstoffdurchsatz eine direkte Funktion eines Umgebungsdrucks und der Rotationsgeschwindigkeit der Strömungsmaschine ist; und
die Leistungselektronik (6) dazu ausgelegt ist, die abgerufene elektrische Leistung derart zu regeln, dass eine Ziel-Rotationsgeschwindigkeit der Strömungsmaschine (Ncible) erreicht wird.

2. Antriebsanordnung für ein Luftfahrzeug nach Anspruch 1, wobei die Kraftstoffpumpe (4) dazu ausgelegt ist, einen zum Umgebungsdruck proportionalen und mit der Rotationsgeschwindigkeit der Strömungsmaschine zunehmenden Kraftstoffdurchsatz bereitzustellen.

3. Antriebsanordnung für ein Luftfahrzeug nach Anspruch 2, wobei die Kraftstoffpumpe (4) eine mechanische Pumpe in direktem Eingriff mit der Strömungsmaschine ist, in welcher der Kraftstoffdurchsatz von der Rotationsgeschwindigkeit der Strömungsmaschine und vom Umgebungsdruck mechanisch abhängt.

4. Antriebsanordnung für ein Luftfahrzeug nach Anspruch 2, umfassend ferner einen Sensor der Rotationsgeschwindigkeit der Strömungsmaschine und einen Sensor des Umgebungsdrucks, wobei die Kraftstoffpumpe (4) eine elektrische Pumpe ist, die dazu ausgelegt ist, den Kraftstoffdurchsatz gemäß einer Funktion des Produkts des Umgebungsdrucks und der Rotationsgeschwindigkeit der Strömungsmaschine bereitzustellen.

5. Antriebsanordnung für ein Luftfahrzeug nach einem der Ansprüche 1 bis 4, umfassend ferner ein Energiespeichersystem (200), das zur Bereitstellung einer zusätzlichen elektrischen Leistung ausgelegt ist, wenn die abgerufene elektrische Leistung kleiner als eine elektrische Zielleistung ist.

6. Antriebsanordnung für ein Luftfahrzeug nach einem der Ansprüche 1 bis 5, umfassend mindestens einen Sensor der Rotationsgeschwindigkeit der Strömungsmaschine (63) und ein Übergeschwindigkeitsüberwachungssystem, das dazu ausgelegt ist, die Rotationsgeschwindigkeit der Strömungsmaschine im Fall eines Ausfalls des Regelungssystems zu regeln.

7. Antriebsanordnung für ein Luftfahrzeug nach einem der Ansprüche 1 bis 6, umfassend mindestens einen Sensor des Umgebungsdrucks (62) und ein System zur Überwachung der Motorgesundheit, das dazu ausgelegt ist, die abgerufene elektrische Leistung mit einer vorgesehenen elektrischen Leistung in Abhängigkeit vom Umgebungsdruck zu vergleichen.

8. Verfahren zur Regelung einer Antriebsanordnung für ein Luftfahrzeug, umfassend eine Strömungsmaschine mit verbundener Turbine, die eine Brennkammer und eine Welle hat, die rotatorisch angebracht und dazu bestimmt ist, in einer Rotationsgeschwindigkeit der Strömungsmaschine zu drehen, und einen Stromgenerator (2), der mit der Welle der Strömungsmaschine gekoppelt ist, wobei das Verfahren die Schritte umfasst, die darin bestehen:
Leiten des Kraftstoffs in die Brennkammer über eine Kraftstoffpumpe (4) mit einem Kraftstoffdurchsatz gemäß einer direkten Funktion eines Umgebungsdrucks und der Rotationsgeschwindigkeit der Strömungsmaschine; und
Abrufen einer elektrischen Leistung vom Stromgenerator (2), wobei die abgerufene elektrische Leistung von einer Leistungselektronik (6) reguliert wird, die an den Stromgenerator (2) derart gekoppelt ist, dass eine Ziel-Rotationsgeschwindigkeit der Strömungsmaschine (Ncible) erreicht wird.

9. Regelungsverfahren nach Anspruch 8, wobei die abgerufene elektrische Leistung und der Kraftstoffdurchsatz von einem ersten Rotationsgeschwindigkeitsgrenzwert der Strömungsmaschine (N1) und einem zweiten Rotationsgeschwindigkeitsgrenzwert der Strömungsmaschine (N2) abhängen, und wobei,
wenn die Rotationsgeschwindigkeit der Strömungsmaschine unter dem ersten Rotationsgeschwindigkeitsgrenzwert der Strömungsmaschine (N1) liegt, der Stromgenerator (2) im Antriebsmodus arbeitet, in welchem der Stromgenerator (2) die Strömungsmaschine unterstützt, und der Kraftstoffdurchsatz proportional zur Rotationsgeschwindigkeit der Strömungsmaschine ist,
wenn die Rotationsgeschwindigkeit der Strömungsmaschine über dem ersten Rotationsgeschwindigkeitsgrenzwert der Strömungsmaschine (N1) und unter dem zweiten Rotationsgeschwindigkeitsgrenzwert der Strömungsmaschine (N2) liegt, die Strömungsmaschine autonom ohne Unterstützung des Stromgenerators (2) ist;
wenn die Rotationsgeschwindigkeit der Strömungsmaschine über dem zweiten Rotationsgeschwindigkeitsgrenzwert der Strömungsmaschine (N2) liegt, der Stromgenerator (2) im Generatormodus arbeitet, und die abgerufene elektrische Leistung von der Leistungselektronik (6) reguliert wird, um eine Nenn-Rotationsgeschwindigkeit der Strömungsmaschine zu erreichen.

10. Regelungsverfahren für eine Antriebsanordnung für ein Luftfahrzeug nach einem der Ansprüche 8 oder 9, wobei die Leistungselektronik (6) dazu ausgelegt ist, die vom Stromgenerator (2) abgerufene elektrische Leistung vor einem mechanischen Lastabruf von der Strömungsmaschine zu regulieren, so dass die abgerufene elektrische Leistung übergangsweise derart verringert wird, dass die Rotationsgeschwindigkeit der Strömungsmaschine zunimmt, dann die abgerufene elektrische Leistung erhöht wird, um die elektrische Zielleistung und eine konstante Rotationsgeschwindigkeit der Strömungsmaschine zu erreichen.

11. Regelungsverfahren für eine Antriebsanordnung für ein Luftfahrzeug nach einem der Ansprüche 8 bis 10, wobei die Leistungselektronik (6) dazu ausgelegt ist, die vom Stromgenerator (2) abgerufene elektrische Leistung vor einem weniger hohen elektrischen Leistungsbedarf zu regulieren, so dass die abgerufene elektrische Leistung übergangsweise derart erhöht wird, dass die Rotationsgeschwindigkeit der Strömungsmaschine verringert wird, dann die abgerufene elektrische Leistung verringert wird, um die elektrische Zielleistung und eine konstante Rotationsgeschwindigkeit der Strömungsmaschine zu erreichen.

12. Regelungsverfahren für eine Antriebsanordnung für ein Luftfahrzeug nach einem der Ansprüche 8 bis 11, das ferner einen Schritt umfasst, der darin besteht:
Vergleichen der abgerufenen elektrischen Leistung mit einer vorgesehenen elektrischen Leistung in Abhängigkeit von einem Umgebungsdruck.

## Claims

1. A propulsion assembly for aircraft comprising:
- a turbomachine (1) with a single-shaft engine, comprising a combustion chamber and a rotatably mounted shaft, intended to turn at a turbomachine rotation speed;
- an electrical generator (2) coupled to the shaft of the turbomachine, and off which an electrical power is intended to be drawn;
the assembly further comprising a control system comprising:
- a fuel pump (4), and
- power electronics coupled to the electrical generator (2),
**characterized in that**
the regulation system is configured to bring fuel into the combustion chamber at a fuel flow rate, the fuel flow rate being a direct function of an ambient pressure and of the turbomachine rotation speed; and
the power electronics (6) being configured to control the electrical power drawn so as to attain a target turbomachine rotation speed (Ncible).

2. The propulsion assembly for aircraft as claimed in claim 1, wherein the fuel pump (4) is configured to supply a fuel flow rate proportional to the ambient pressure and increasing with the turbomachine rotation speed.

3. The propulsion assembly for aircraft as claimed in claim 2, wherein the fuel pump (4) is a mechanical pump in direct engagement with the turbomachine, wherein the fuel flow rate mechanically depends on the rotation speed of the turbomachine rotation speed and on the ambient pressure.

4. The propulsion assembly for aircraft as claimed in claim 2, further comprising a sensor of the turbomachine rotation speed and an ambient pressure sensor, wherein the fuel pump (4) is an electrical pump configured to supply the fuel flow rate according to a function of the product of the ambient pressure and the turbomachine rotation speed.

5. The propulsion assembly for aircraft as claimed in one of claims 1 to 4, further comprising an energy-storing system (200) configured to supply an additional electrical power when the electrical power drawn is less than a target electrical power.

6. The propulsion assembly for aircraft as claimed in any of claims 1 to 5, comprising at least one sensor (63) of the turbomachine rotation speed and an overspeed monitoring system configured to control the turbomachine rotation speed in the event of a malfunction of the control system.

7. The propulsion assembly for aircraft as claimed in any of claims 1 to 6, comprising at least one ambient pressure sensor (62) and an engine health monitoring system, configured to compare the drawn electrical power to a planned electrical power depending on the ambient pressure.

8. A method for controlling a propulsion assembly for aircraft comprising a single-shaft engine turbomachine, having a combustion chamber and a shaft rotatably mounted and intended to turn at a turbomachine rotation speed, and an electrical generator (2) coupled to the shaft of the turbomachine, the method comprising the steps consisting in:
bringing fuel into the combustion chamber by way of a fuel pump (4) by enforcing a fuel flow rate according to a direct function of an ambient pressure and of the turbomachine rotation speed; and
drawing an electrical power off the electrical generator (2) the electrical power drawn being controlled by power electronics (6) coupled to the electrical generator (2) such as to attain a target turbomachine rotation speed (Ncible).

9. The control method as claimed in claim 8, wherein the drawn electrical power and the fuel flow rate depend on a first turbomachine rotation speed threshold (N1) and a second turbomachine rotation speed threshold (N2), and wherein
if the turbomachine rotation speed is less than the first turbomachine rotation speed threshold (N1), the electrical generator (2) operates in engine mode wherein the electrical generator (2) assists the turbomachine, and the fuel flow rate is proportional to the turbomachine rotation speed,
if the turbomachine rotation speed is greater than the first turbomachine rotation speed threshold (N1) and less than the second turbomachine rotation speed threshold (N2), the turbomachine is autonomous without the assistance of the electrical generator (2);
if the turbomachine rotation speed is greater than the second turbomachine rotation speed threshold (N2), the electrical generator (2) operates in generator mode, and the drawn electrical power is controlled by the power electronics (6) to attain a nominal turbomachine rotation speed.

10. The control method for a propulsion assembly for aircraft as claimed in any of claims 8 or 9, wherein the power electronics (6) is configured to control the electrical power drawn off the electrical generator (2) upstream of a mechanical load sensed on the turbomachine, such as to transiently reduce the drawn electrical power such as to increase the turbomachine rotation speed, then increase the drawn electrical power to attain the target electrical power and a constant turbomachine rotation speed.

11. The control method for a propulsion assembly for aircraft as claimed in any of claims 8 or 10, wherein the power electronics (6) is configured to control the electrical power drawn off the electrical generator (2) upstream of a less significant power requirement, such as to transiently increase the drawn electrical power such as to reduce the turbomachine rotation speed, then reduce the drawn electrical power to attain the target electrical power and a constant turbomachine rotation speed.

12. The control method for a propulsion assembly for aircraft as claimed in any of claims 8 to 11, further comprising a step consisting in:
comparing the drawn electrical power to a planned electrical power depending on an ambient pressure.
